# EUROPEAN PATENT SPECIFICATION

(11) **EP 4 241 544 B1**
(45) Date of publication and mention of the grant of the patent: **17.09.2025**
(21) Application number: 23161037.9
(22) Date of filing: 09.03.2023
(51) Int. Cl.: A01B 49/02

(54) **AGRICULTURAL MACHINE PROVIDED FOR COMBINED APPLICATION**
LANDMASCHINE FÜR EINEN KOMBINIERTEN EINSATZ
MACHINE AGRICOLE PRÉVUE POUR UNE APPLICATION COMBINÉE

(30) Priority: 09.03.2022 IT 202200004532
(43) Date of publication of application: 13.09.2023
(73) Proprietor: Maschio Gaspardo S.p.A., 35011 Campodarsego (PD) (IT)
(72) Inventor: MASCHIO, Andrea, 33075 Morsano al Tagliamento (PN) (IT); BARALDI, Paolo, 35137 Padova (IT); BIGOLARO, Davide, 35020 Albignasego (PD) (IT)
(74) Representative: Locas, Davide

(56) References cited:
- EP-A1- 0 298 554
- EP-A2- 0 677 236
- AU-A- 1 753 300

## Description

### Technical field

The present invention relates to an agricultural machine which is provided for combined application.

### Technological background

In the agricultural field, there are defined combined machines with particular equipment items which combine two or more simple machines, defined hereinafter as operating stations, so as to carry out on the ground in a single pass two or more operations which are normally carried out in successive passes by the simple machines themselves. In a typical embodiment, the simple machines are a harrow and a sowing bar or sower, respectively, and the combined machine allows the ground to be harrowed and sown in a single pass. The advantage is evident as a result of the substantial saving of time and fuel, the lesser compaction of the ground as a result of the reduced trampling by means of the agricultural tractor and the better condition for germinability in which the seeds are placed in the ground if the sowing immediately follows the preparation of the seed bed.

It is known to construct combined machines by using for the first operating station a rotary harrow which is provided at the rear with a levelling roller and by coupling the second operating station either to the carrier structure of the first station or to the support for the roller thereof.

In this second case, it is preferable, and even necessary when the second operating station is a precision sower, for the roller to be connected to the harrow by means of an articulated parallelogram type mechanism so as to allow vertical movements of the roller, maintaining the support of the second station substantially parallel with itself.

This system is made necessary in order to always keep the sowing bar of the sower, as it is coupled to the support of the roller, parallel with itself and with the ground in order to allow effective control of the sowing depth.

On the other hand, the connection system of the roller with an articulated parallelogram type support is generally more expensive than the more conventional roller with a support which is hinged to the carrier structure of the harrow and therefore it is usual to maintain two product lines, the "standard" version with support of the hinged roller for conventional harrows and the "combi" version with support of the articulated parallelogram type roller for combined machines.

In this second case, however, it is necessary to accept an additional inefficiency because the adjustment of the roller cannot be carried out in a simple manner via a system using actuators, for example, of the hydraulic type, but only in a mechanical manner by means of movable pins which is very troublesome for the operator because it requires him/her to get down from the tractor, remove the pins for adjusting the position of the roller (so as to vary the harrowing depth) and to reposition them by making them suitably correspond to the positioning holes, which is anything but easy. Conversely, in the hinged rollers it is sufficient to actuate the hydraulic actuators which are provided for adjusting the roller, and the repositioning is completely automatic.

Examples of combined agricultural machines for processing the ground and the sowing are described in EP0298554A1 or AU1753300A.

A main disadvantage of the combined machine which is described in

EP0298554A1 is that the sower necessarily has to have a special frame in order to be able to be connected to the remainder of the machine and therefore it is not possible to replace this sower with a different operating station. On the other hand, it would be desirable to have a combined machine which is more versatile.

### Description of the invention

The problem addressed by the present invention is to provide an agricultural machine which is provided for combined application which is structurally and functionally configured to overcome at least some of the disadvantages set out with reference to the cited prior art.

In this context, an important objective of the invention is to make available an agricultural machine and particularly a rotary harrow which combines the advantages of constructional simplicity and economy of the systems for adjusting the roller with a hinged pivoting arm and which allows a potential sowing bar to be maintained parallel with the ground, thereby allowing sowing at a rigorously constant depth.

Another objective of the invention is to provide an agricultural machine, particularly a harrow, which is suitable for producing combined machines but which allows a simplified hydraulic adjustment of the position of the roller.

Yet another objective of the invention is to produce a kit which allows ready adaptation but with complete efficiency of a conventional harrow or similar first operating station with a hinged roller to the production of combined machines. This problem is solved and these objects are at least partially achieved by the invention by means of an agricultural machine constructed according to at least some of the features of the appended claims.

According to an aspect of the invention, an agricultural machine which is provided for combined application comprises a first operating station which is provided with a carrier structure and a support for a roller which is mounted in a pivoting manner on the carrier structure about a first axis. The roller is part of the first operating station.

The support includes a first arm which is hinged to the carrier structure about the first axis and which carries the roller rotatably about a second axis which is parallel with and spaced apart from the first axis. The first station is provided with an additional support for mounting in concatenation a second operating station which is in the form of an articulated quadrilateral, two contiguous sides of which comprise the first arm and the carrier structure. It is thereby possible to combine the most evident advantages of an operating station with a hinged roller (production economy, constructional simplicity, ease of adjustment) with the typical advantages of an articulated parallelogram type support.

The opposite sides of the articulated quadrilateral are the first arm and a linkage, as well as a second arm and the carrier structure, respectively. The second arm is articulated at one end to the first arm about a third axis which is parallel with and spaced apart from the first axis and at the opposite end to a connecting rod foot end of the linkage.

The terms "foot" and "head" of a connecting rod are preferably used in the present context in an interchangeable manner in order to indicate the opposite ends of the linkage, where it is hinged to the remaining sides of the quadrilateral without any other specific mechanical significance.

The linkage has a connecting rod head end which is opposite the connecting rod foot end and which is articulated to the carrier structure about a fourth axis which is parallel with and spaced apart from the first axis, the second arm being arranged with a connection system for the second station. In particular, the connection system is of the reversible type including, for example, a support which is provided for engaging with the second station.

In this manner, though advantageously using a support for the roller of the hinged and pivoting type with respect to the carrier structure, the support for the second station is maintained parallel with itself and the ground with all the advantages resulting from the articulated parallelogram type supports. Furthermore, there is afforded the additional advantage of a structure which is suitable for adjustment with an adjustable strut and, if desired, with a hydraulic actuator of the position of the roller with respect to the carrier structure of the first operating station.

The structure of the first station is simplified by the fact that the second axis and third axis coincide, that is to say, the second arm is articulated to the first arm on the rotation axis of the roller. In this way, the two articulations can benefit from the same bearing support.

In another embodiment, the connection system for the second station is arranged at a distal end of the second arm with respect to the second and/or third axis and the articulation of the connecting rod foot end. In this manner, the articulation of the connecting rod to the second arm is arranged in an intermediate position between the connection system for the second station and the second or third axis.

There is preferably provision for the second arm to be further secured to the support of the roller in a circumferential slot which is centred about the third axis. The securing is obtained, for example, by means of a projection of the flank of the roller which serves to engage in the circumferential slot, preferably by engaging therewith. In this manner, the support of the roller and the second operating station are further maintained with respect to the lateral tilting and the slot can further act and/or collaborate in the action as a travel limiter for the pivoting of the roller. The projection and the slot can also be made with a transposed system: that is to say, an arcuate guide can be fixed to the upper portion of the flank of the roller and a fixed tooth which serves to engage in this circular guide, preferably by engaging therewith can be placed on the plate.

In a preferred embodiment of the invention, the first station is a rotary harrow and, still in a preferable manner, the second station is a sowing bar. However, there is provision for the invention to be generally used in the combined equipment items in which the first station is constituted by a machine for processing the ground with a roller with a hinged connection, particularly both active (for example, harrow, milling cutter, etc.) and passive (for example, disk harrow, etc.), and the second station is constituted by an equipment item (in the present embodiment, an equipment item for sowing) which has to operate parallel with the first station in varying the adjustment of the roller of the first station.

According to one embodiment, standard components are used for the production of series of rotary harrows if the first arm comprises a flank of the support of the roller.

In this case, it is advantageous for the carrier structure to comprise a case of the harrow closed at the opposite ends by respective flanks and the connecting rod head end of the linkage to be articulated to the respective flank.

There is provision for the support of the roller to be able to be secured in an adjustable manner to the carrier structure for pivoting about the first axis by means of an adjustable strut which is interposed between the support of the roller and the carrier structure. The adjustable strut is preferably constructed by an actuator, the actuator being mechanical or hydraulic.

The invention is further suitable for constructing a kit, via which it is possible to modify pre-existing simple machines. Furthermore, the invention is suitable both for equipping fixed machines and foldable machines.

In one aspect, therefore, the invention relates to a kit for mounting a second operating station in concatenation with respect to a first station, the first station being provided with a carrier structure and a support for a roller which is mounted in a pivoting manner on the carrier structure about a first axis, the support of the roller including a first arm which is hinged to the carrier structure about the first axis and which carries the roller in a rotatable manner about a second axis which is parallel with and spaced apart from the first axis.

The kit includes a linkage and a second arm.

The second arm is articulated at one end to a connecting rod foot end of the linkage and at the opposite end it is provided to be articulated to the first arm about a third axis which is parallel with and spaced apart from the first axis. The linkage has a connecting rod head end which is opposite the connecting rod foot end and which is provided to be articulated to the carrier structure about a fourth axis which is parallel with and spaced apart from the first axis.

It will be appreciated that the linkage and the second arm are therefore provided to be articulated to the first arm and the carrier structure so as to define an additional support for supporting the second station on the first station, the additional support for the second station comprising an articulated quadrilateral. The pairs of opposite sides of the articulated quadrilateral comprise the first arm and the linkage, as well as the second arm and the carrier structure, respectively. The second arm is preferably provided with a connection system of the reversible type for the second station.

The connection system may include a support which is provided for engaging with the second station.

The connecting rod foot end of the linkage is preferably arranged to be articulated to the second arm in an intermediate position between the connection system and the third axis.

The second arm is preferably provided to be secured to the support of the roller in a circumferential slot which is centred about the third axis.

It will be understood that, in embodiments, the kit may include the additional support for supporting the second station on the first station, the additional support for the second station preferably comprising the articulated quadrilateral, two contiguous sides of which preferably comprise the first arm and the carrier structure. Advantageously, the connection system for the second station is provided on the articulated quadrilateral.

### Brief description of the drawings

The features and advantages of the invention will be better appreciated from the following detailed description of a preferred embodiment thereof which is illustrated by way of non-limiting example with reference to the appended drawings, in which:
- Figures 1 to 3 are side elevational views of a combined machine which is constructed according to the present invention in three different adjustment positions;
- Figure 4 is a perspective view of a kit according to the invention;
- Figure 5 is a view, drawn to an enlarged scale, of the machine of Figures 1 to 3.

### Preferred embodiment of the invention

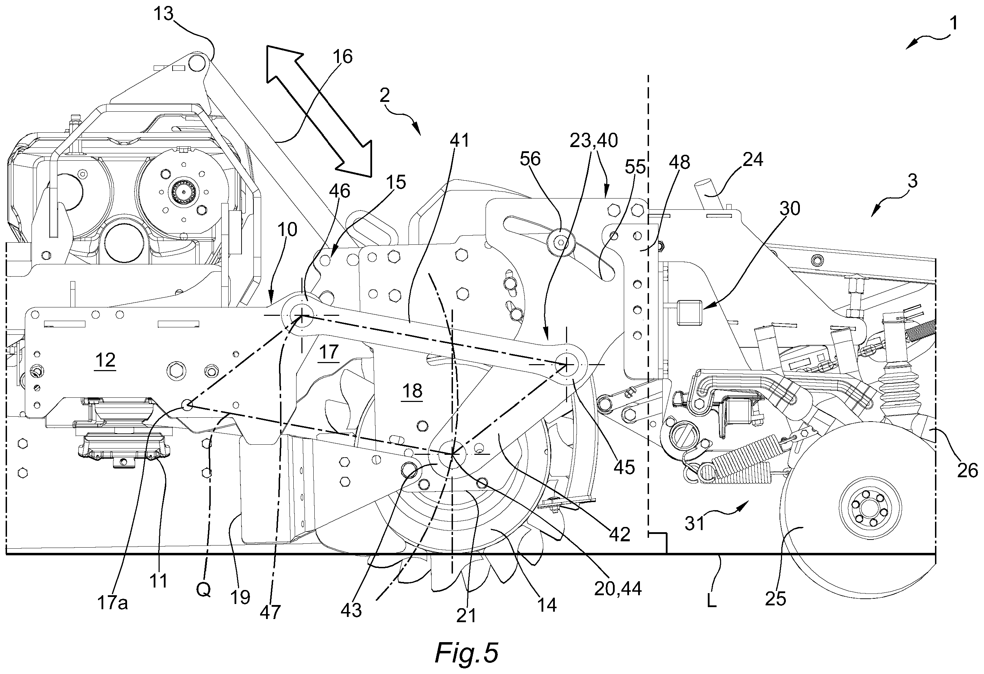

In the Figures, there is generally designated 1 a combined agricultural machine which, with reference to Figure 5 in particular, includes a first operating station 2, for example and preferably a rotary harrow, which is provided for combined application, that is to say, to be combined in concatenation, that is, one following the other, with a second machine or operating station 3, for example and preferably a sowing bar. Different machines are also suitable for the combined application, and generally those in which the first station is constituted by a machine for processing the ground with a roller with a hinged connection, both an active one (for example, harrow, miller, etc.) and a passive one (for example, disk harrow, etc.) and the second is constituted by an equipment item, particularly an agricultural equipment item, which has to operate parallel with the first station in varying the adjustment of the roller of the first station.

In any case, the first station 2 is described using as an explanatory example a rotary harrow which, with the exception of what is described below, has a form which is conventional per se, with a carrier structure 10 which is formed by way of example in a chest-like manner and on which a plurality of rotors 11 with a vertical axis which can be actuated in terms of rotation via a power take-off of an agricultural tractor are supported.

The chest of the carrier structure 10 is preferably closed at opposite ends by end plates 12 and has a frame, with which there engages in known manner a lifting mechanism with three-point attachment of the tractor. There is advantageously hinged to each of the end plates 12 of the carrier structure a support 15 for a roller 14 which serves to adjust the harrowing depth of the rotors 11. The adjustment can be carried out by means of one or more adjustable struts 16, for example, which are constituted by hydraulic actuators or screw and nut type actuators which are interposed between the carrier structure 10, in particular an additional frame 13 thereof, and the support 15 of the roller 14. The extension or contraction of the adjustable struts is reflected in a pivoting of the roller about the first axis 17a, about which a first arm 17 of the support 15 is hinged.

In the present embodiment, the support 15 of the roller further comprises a pair of opposite flanks 18 which are fixedly joined to the first arm 17 and which are preferably connected to each other by a beam 19. With respect to the support 15 of the roller, only one of the two opposite sides thereof is described below. It will be understood that preferably the opposite side is structurally identical and where applicable specular.

Precisely since the roller 14 can pivot with respect to the carrier structure about the first axis 17a, this type of harrows is characterized as being of the type with a roller which is hinged or pivoting, in order to distinguish them from harrows in which the roller is supported on the carrier structure by means of a system with an articulated parallelogram.

The roller 14 is idly mounted on the first arm 17 about a second axis 20, particularly by means of bearings 21. The second axis 20 is parallel with and spaced apart with respect to the first axis 17a. The first station 2 is further provided with an additional support 23 for mounting in concatenation the second operating station 3 which, in the embodiment set out, is constructed by a sowing bar which in turn includes a carrier structure 30, on which there are mounted a plurality of sowing elements 31 which are parallel and uniformly spaced apart. The sowing elements are individually controlled, in the example illustrated, by a pneumatic system which is not illustrated for distributing the seed. A tube 24 for pneumatically transporting the seed can join each sowing element. Each sowing element can further be conventionally provided with furrow openers 25 and seed-covering devices 26.

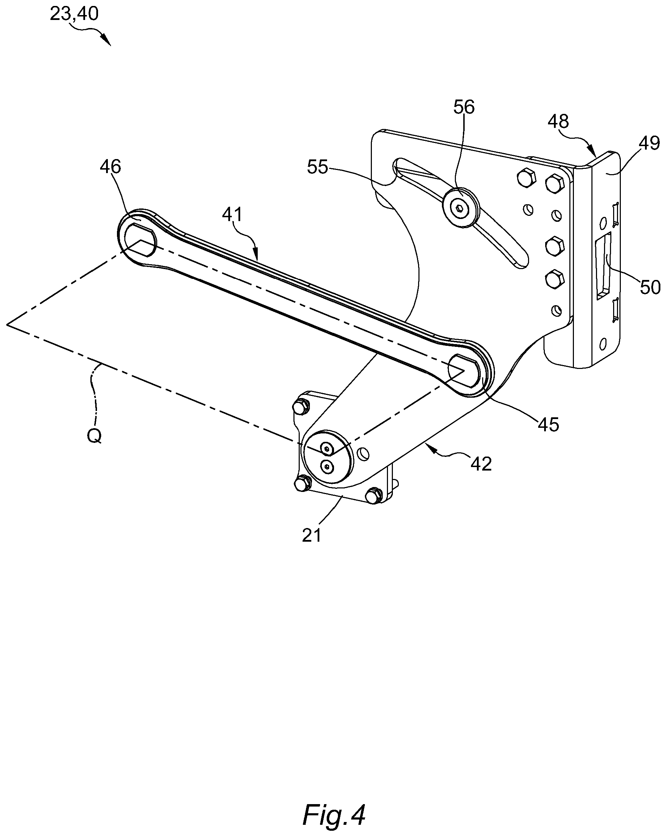

Also with reference to the example of Figure 4, a main peculiarity of the present invention involves a kit 40 to be installed on the first operating station 2 in order to adapt the operating station 2 to the construction of combined machines.

Preferably, the kit 40 is such as to convert the pivoting movement of the roller 14 into a translational movement of the sowing bar 3 so as to maintain it parallel with itself when it is moved following an adjustment of the harrowing depth by means of the roller 14.

To this end, the kit 40 comprises a linkage 41 and a second arm 42 which are provided in order to be articulated to the first arm 17 and the carrier structure 10 so as to define an articulated quadrilateral Q, the pairs of opposite sides of which are constituted by the first arm 17 and the linkage 41, as well as the second arm 42 and the carrier structure 10, respectively, preferably in the region of the two respective end plates 12. In embodiments, the second arm 42 is articulated with an end 43 thereof to the first arm 17 about a third axis 44 which is parallel with and spaced apart with respect to the first axis 17a and at the opposite end to a connecting rod foot end 45 of the linkage 41. Advantageously, the linkage 41 has in turn a connecting rod head end 46 which is opposite the connecting rod foot end 45 and which is articulated to the carrier structure about a fourth axis 47 which is parallel with and spaced apart with respect to the first axis 17a. A connection system 48 for the second station (in the example, the sowing bar 3) is preferably mounted on the end of the second arm 42 opposite the articulation with respect to the first arm (third axis 44). In this manner, the connection system 48 is moved as a result of the movement of the roller 14 in accordance with the kinematic rules of an articulated parallelogram type mechanism, notwithstanding the fact that the support of the roller 14 is of the hinged and pivoting type.

The connection system 48 allows a connection of the second station 3 to the second arm 42 in an advantageously reversible manner. In the present embodiment, the connection system 48 comprises an extension piece 49, in which there is defined at least one opening 50 for engaging with the second station. Naturally, different connection systems are possible, for example, by means of fixing pins or threaded connection means.

The second axis and third axis 20, 44 coincide. In this manner, the structure of the kit 40 is further simplified because the articulation of the second arm 42 to the first arm 17 uses the same bearing support 21 as the one used for mounting the roller 14 on the first arm 17. Preferably, the connecting rod foot end 45 of the linkage 41 is articulated to the second arm 42 in an intermediate position between the connection system 48 and the third axis 44 so that the connection system 48 is located at a distal end of the second arm with respect to the third axis.

In a preferred embodiment of the invention, the second arm 42 is further secured to the support 15 of the roller in a circumferential slot 55 which is centred about the third axis 44. The securing is brought about by means of a roll 56 which is preferably flanged so as to be free to slide along the development of the slot 55, but retained in the orthogonal direction relative to the plane of the second arm 42. This serves both to delimit a pivoting travel limit stop of the second arm 42 with respect to the carrier structure of the first station 2 and to reinforce the machine 1 against the possibility of lateral movement of the roller 14 (in the axial direction thereof), notwithstanding the increase of mass carried as a result of the effect of the sowing bar 3. It may be noted that this solution further contributes to the sowing precision by generally stiffening the machine 1.

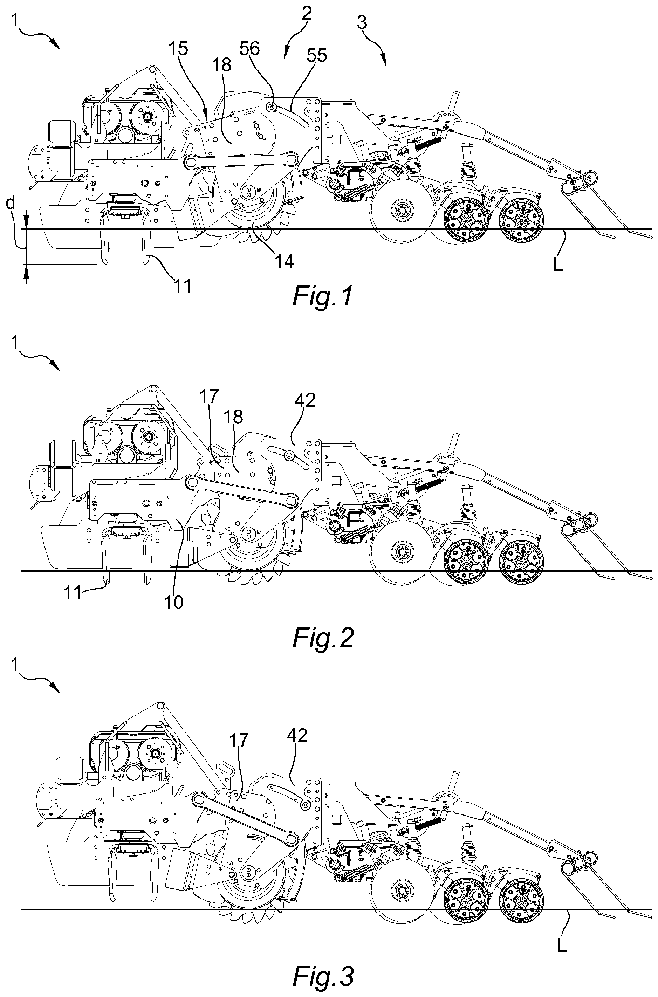

Preferably, the first arm 17 comprises a flank 18 of the support of the roller 14. The operation of the combined machine 1 is described below with reference to Figures 1 to 3.

In Figure 1, the first operating station 2 (in the embodiment illustrated, a rotary harrow) is adjusted for a pass at the maximum operating depth d of the rotors 11 with respect to the level of the ground L. The support 15 of the roller 14 is in the maximum pivoting position in an upward direction and the roll 56 is at the travel limit stop in abutment against one of the ends of the slot 55. It will be observed that the pivoting of the flank 18 of the support 15 (and therefore of the first arm) is compensated for by the corresponding pivoting of the second arm 42 towards the sowing bar 3. The linkage 41 between the carrier structure 10 (plate 12 of the chest) and the second arm 42 maintains the second arm 42 in such a position with respect to the axis of the roller 14 that the connection system 48 has a predetermined orientation. In Figure 2, the working depth of the first station 2 is adjusted for an intermediate driving position of the rotors 11. It may be observed that the first arm 17 is caused to pivot with respect to the carrier structure 10 with a substantial pivoting of the support 15 of the roller. In particular, there can be seen the different vertical positioning of the flank 18. This pivoting is compensated for by the counter-rotation of the second arm 42 in such a manner that the connection system 48 of the second station remains in an unchanged position and orientation.

In Figure 3, the harrow is raised with respect to the level of the ground L and the second arm 42 compensates for the rotation of the first arm 17 via the connection of the linkage 41 to the carrier structure 10. In this case, the position of the connection system 48 of the second station and the orientation thereof have also remained unchanged.

The invention thereby solves the problem set out, achieving a number of advantages. In particular, the invention allows the use of machines with a hinged roller and where applicable the hydraulic adjustment thereof, which provides a solution which is simpler, less heavy and less expensive with respect to the machines with a parallelogram type roller. Furthermore, by means of the additional kit to which the invention relates, it is possible to convert the first station in a simple and effective manner in order to construct a combined machine.

## Claims

1. An agricultural machine (1) which is provided for combined application, comprising a first operating station (2) which is provided with a carrier structure (10), a roller (14), and a support (15) for the roller (14) which is mounted in a pivoting manner on the carrier structure about a first axis (17a), the support (15) including a first arm (17) which is hinged to the carrier structure (10) about the first axis (17a) and which carries the roller (14) rotatably about a second axis (20) which is parallel with and spaced apart from the first axis (17a), the first station (2) being provided with an additional support (23) for mounting a second operating station (3) in concatenation, the additional support (23) for the second station comprising an articulated quadrilateral (Q), two contiguous sides of which comprise the first arm (17) and the carrier structure (10), wherein the pairs of opposite sides of the articulated quadrilateral (Q) comprise the first arm (17) and a linkage (41), as well as a second arm (42) and the carrier structure (10), respectively, the second arm (42) being articulated at one end to the first arm (17) about a third axis (44) which is parallel with and spaced apart from the first axis (17a) and at the opposite end to a connecting rod foot end (45) of the linkage, the linkage (41) having a connecting rod head end (46) which is opposite the connecting rod foot end (45) and which is articulated to the carrier structure (10) about a fourth axis (47) which is parallel with and spaced apart from the first axis (17a), the second arm (42) being arranged with a connection system (48) for the second station, **characterized in that** the second axis and third axis (20, 44) coincide, that is to say, the second arm (42) is articulated to the first arm (17) on the rotation axis of the roller (14).

2. An agricultural machine (1) according to claim 1, wherein the connection system (48) for the second station is arranged at a distal end of the second arm (42) with respect to the third axis (44) and the articulation of the connecting rod foot end (45).

3. An agricultural machine (1) according to claim 1 or 2, wherein the second arm (42) is further secured to the support (15) of the roller in a circumferential slot (55) which is centred about the third axis (44).

4. An agricultural machine (1) according to one or more of the preceding claims, wherein the first arm (17) comprises a flank (18) of the support of the roller.

5. An agricultural machine (1) according to one or more of the preceding claims, wherein the first station (2) is a rotary harrow and the second station (3) is a sowing bar.

6. An agricultural machine (1) according to claim 5, wherein the carrier structure (10) comprises a case of the harrow closed at the opposite ends by respective flanks (12) and the connecting rod head end (46) of the linkage is articulated to the respective flank (12).

7. An agricultural machine (1) according to one or more of the preceding claims, wherein the support (15) of the roller is secured in an adjustable manner to the carrier structure (10) for pivoting about the first axis (17a) by means of an adjustable strut (16) which is interposed between the support (15) of the roller and the carrier structure (10).

8. An agricultural machine (1) according to claim 7, wherein the adjustable strut (16) is an actuator.

9. An agricultural machine (1) according to one or more of the preceding claims, wherein the connection system (48) is of the reversible type including a support which is arranged for engaging with the second station.

10. An agricultural machine (1) according to one or more of the preceding claims, wherein the connection system (48) comprises an extension piece (49), in which there is defined at least one opening (50) for engaging with the second station.

11. An agricultural machine (1) according to one or more of the preceding claims, wherein the connecting rod foot end (45) of the linkage (41) is articulated to the second arm (42) in an intermediate position between the connection system (48) and the third axis (44).

12. An agricultural machine (1) according to one or more of the preceding claims, wherein the two articulations of the second axis and third axis (20, 44) benefit from a same bearing support.

13. A kit (40) for mounting a second operating station (3) in concatenation with respect to a first station (2), the first station being provided with a carrier structure (10) and a support (15) for a roller (14) which is mounted in a pivoting manner on the carrier structure about a first axis (17a), the support (15) of the roller including a first arm (17) which is hinged to the carrier structure about the first axis (17a) and which carries the roller in a rotatable manner about a second axis (20) which is parallel with and spaced apart from the first axis (17a), the kit (40) including a linkage (41) and a second arm (42), the second arm (42) being articulated at one end to a connecting rod foot end (45) of the linkage and at the opposite end being arranged to be articulated to the first arm (17) about a third axis (44) which is parallel with and spaced apart with respect to the first axis (17a), the linkage (41) having a connecting rod head end (46) which is opposite the connecting rod foot end (45) and which is arranged to be articulated to the carrier structure (10) about a fourth axis (47) which is parallel with and spaced apart with respect to the first axis (17a), the linkage (41) and the second arm (42) being arranged to be articulated to the first arm (17) and the carrier structure (10) so as to define an additional support (23) for supporting the second station (2) on the first station (1), the additional support (23) for the second station comprising an articulated quadrilateral (Q), wherein the pairs of opposite sides of the articulated quadrilateral (Q) comprise the first arm (17) and the linkage (41), as well as the second arm (42) and the carrier structure (10), respectively, the second arm (42) being arranged with a connection system (48) for the second station, **characterized in that** the second arm (42) is configured to be articulated to the first arm (17) on the rotation axis of the roller (14) such that the second axis and third axis (20, 44) coincide.

14. A kit according to claim 13, wherein the connection system (48) is of the reversible type including a support which is arranged for engaging with the second station.

15. A kit according to claim 13 or 14, wherein the connection system (48) comprises an extension piece (49), in which there is defined at least one opening (50) for engaging with the second station.

## Patentansprüche

1. Landwirtschaftliche Maschine (1), die zum kombinierten Einsatz vorgesehen ist, umfassend eine erste Bedienstation (2), die mit einer Trägerstruktur (10) versehen ist, eine Walze (14) und eine Stütze (15) für die Walze (14), die schwenkbar um eine erste Achse (17a) an der Trägerstruktur montiert ist, wobei die Stütze (15) einen ersten Arm (17) umfasst, der um die erste Achse (17a) an der Trägerstruktur (10) angelenkt ist und die Walze (14) um eine zweite Achse (20) drehbar trägt, die parallel zu der ersten Achse (17a) und von dieser beabstandet ist, wobei die erste Station (2) mit einer zusätzlichen Stütze (23) zum Montieren einer zweiten Bedienstation (3) in Verkettung vorgesehen ist, wobei die zusätzliche Stütze (23) für die zweite Station ein Gelenkviereck (Q) umfasst, von dem zwei aneinandergrenzende Seiten den ersten Arm (17) und die Trägerstruktur (10) umfassen, wobei die Paare gegenüberliegender Seiten des Gelenkvierecks (Q) jeweils den ersten Arm (17) und eine Verbindung (41) sowie einen zweiten Arm (42) und die Trägerstruktur (10) umfassen, wobei der zweite Arm (42) an einem Ende um eine dritte Achse (44), die parallel zu der ersten Achse (17a) und von dieser beabstandet ist, an den ersten Arm (17) und an dem gegenüberliegenden Ende an ein Verbindungsstangenfußende (45) der Verbindung angelenkt ist, wobei die Verbindung (41) ein Verbindungsstangenkopfende (46) umfasst, das dem Verbindungsstangenfußende (45) gegenüberliegt und das um eine vierte Achse (47), die parallel zu der ersten Achse (17a) und von dieser beabstandet ist, an der Trägerstruktur (10) angelenkt ist, wobei der zweite Arm (42) mit einem Verbindungssystem (48) für die zweite Station angeordnet ist, **dadurch gekennzeichnet, dass** die zweite Achse und die dritte Achse (20, 44) zusammenfallen, d. h. der zweite Arm (42) an der Drehachse der Walze (14) an dem ersten Arm (17) angelenkt ist.

2. Landwirtschaftliche Maschine (1) nach Anspruch 1, wobei das Verbindungssystem (48) für die zweite Station an einem distalen Ende des zweiten Arms (42) in Bezug auf die dritte Achse (44) und die Anlenkung des Verbindungsstangenfußendes (45) angeordnet ist.

3. Landwirtschaftliche Maschine (1) nach Anspruch 1 oder 2, wobei der zweite Arm (42) ferner an der Stütze (15) der Walze in einem Umfangsschlitz (55) befestigt ist, der um die dritte Achse (44) zentriert ist.

4. Landwirtschaftliche Maschine (1) nach einem oder mehreren der vorstehenden Ansprüche, wobei der erste Arm (17) eine Flanke (18) der Stütze der Walze umfasst.

5. Landwirtschaftliche Maschine (1) nach einem oder mehreren der vorstehenden Ansprüche, wobei die erste Station (2) eine Kreiselegge ist und die zweite Station (3) eine Säschiene ist.

6. Landwirtschaftliche Maschine (1) nach Anspruch 5, wobei die Trägerstruktur (10) ein Gehäuse der Egge umfasst, das an den gegenüberliegenden Enden durch jeweilige Flanken (12) geschlossen ist, und das Verbindungsstangenkopfende (46) der Verbindung an der jeweiligen Flanke (12) angelenkt ist.

7. Landwirtschaftliche Maschine (1) nach einem oder mehreren der vorstehenden Ansprüche, wobei die Stütze (15) der Walze mittels einer verstellbaren Strebe (16), die zwischen der Stütze (15) der Walze und der Trägerstruktur (10) angeordnet ist, zur Schwenkung um die erste Achse (17a) verstellbar an der Trägerstruktur (10) befestigt ist.

8. Landwirtschaftliche Maschine (1) nach Anspruch 7, wobei die verstellbare Strebe (16) ein Aktuator ist.

9. Landwirtschaftliche Maschine (1) nach einem oder mehreren der vorstehenden Ansprüche, wobei das Verbindungssystem (48) vom umkehrbaren Typ ist, der eine Stütze umfasst, die zum Eingriff mit der zweiten Station angeordnet ist.

10. Landwirtschaftliche Maschine (1) nach einem oder mehreren der vorstehenden Ansprüche, wobei das Verbindungssystem (48) ein Erstreckungsstück (49) umfasst, in dem mindestens eine Öffnung (50) zum Eingriff mit der zweiten Station definiert ist.

11. Landwirtschaftliche Maschine (1) nach einem oder mehreren der vorstehenden Ansprüche, wobei das Verbindungsstangenfußende (45) der Verbindung (41) an dem zweiten Arm (42) in einer Zwischenposition zwischen dem Verbindungssystem (48) und der dritten Achse (44) angelenkt ist.

12. Landwirtschaftliche Maschine (1) nach einem oder mehreren der vorstehenden Ansprüche, wobei die beiden Gelenke der zweiten Achse und der dritten Achse (20, 44) von einer denselben Lagerstütze profitieren.

13. Bausatz (40) zum Montieren einer zweiten Bedienstation (3) in Verkettung in Bezug auf eine erste Station (2), wobei die erste Station mit einer Trägerstruktur (10) und einer Stütze (15) für eine Walze (14) vorgesehen ist, die schwenkbar an der Trägerstruktur um eine erste Achse (17a) montiert ist, wobei die Stütze (15) der Walze einen ersten Arm (17) umfasst, der um die erste Achse (17a) an der Trägerstruktur angelenkt ist und der die Walze um eine zweite Achse (20) drehbar trägt, die parallel zu der ersten Achse (17a) und von dieser beabstandet ist, wobei der Bausatz (40) eine Verbindung (41) und einen zweiten Arm (42) umfasst, wobei der zweite Arm (42) an einem Ende an einem Verbindungsstangenfußende (45) der Verbindung angelenkt ist und am gegenüberliegenden Ende angeordnet ist, an dem ersten Arm (17) um eine dritte Achse (44) angelenkt zu sein, die parallel zu und beabstandet in Bezug auf die erste Achse (17a) ist, wobei die Verbindung (41) ein Verbindungsstangenkopfende (46) umfasst, das dem Verbindungsstangenfußende (45) gegenüberliegt und das angeordnet ist, an der Trägerstruktur (10) um eine vierte Achse (47) angelenkt zu sein, die parallel zu und beabstandet in Bezug auf die erste Achse (17a) ist, wobei die Verbindung (41) und der zweite Arm (42) angeordnet sind, an dem ersten Arm (17) und der Trägerstruktur (10) angelenkt zu sein, um eine zusätzliche Stütze (23) zum Stützen der zweiten Station (2) an der ersten Station (1) zu definieren, wobei die zusätzliche Stütze (23) für die zweite Station ein Gelenkviereck (Q) umfasst, wobei die Paare gegenüberliegender Seiten des Gelenkvierecks (Q) jeweils den ersten Arm (17) und die Verbindung (41) sowie den zweiten Arm (42) und die Trägerstruktur (10) umfassen, wobei der zweite Arm (42) mit einem Verbindungssystem (48) für die zweite Station versehen ist, **dadurch gekennzeichnet, dass** der zweite Arm (42) konfiguriert ist, an der Drehachse der Walze (14) an den ersten Arm (17) angelenkt zu sein, so dass die zweite Achse und die dritte Achse (20, 44) zusammenfallen.

14. Bausatz nach Anspruch 13, wobei das Verbindungssystem (48) vom umkehrbaren Typ ist, der eine Stütze umfasst, die zum Eingriff mit der zweiten Station angeordnet ist.

15. Bausatz nach Anspruch 13 oder 14, wobei das Verbindungssystem (48) ein Erstreckungsstück (49) umfasst, in dem mindestens eine Öffnung (50) zum Eingriff mit der zweiten Station definiert ist.

## Revendications

1. Machine agricole (1) prévue pour une application combinée, comprenant une première station de travail (2) pourvue d'une structure porteuse (10), d'un rouleau (14) et d'un support (15) pour le rouleau (14) qui est monté de manière pivotante sur la structure porteuse autour d'un premier axe (17a), le support (15) inclut un premier bras (17) qui est articulé à la structure porteuse (10) autour du premier axe (17a) et qui porte le rouleau (14) de manière rotative autour d'un deuxième axe (20) qui est parallèle et espacé par rapport au premier axe (17a), la première station (2) est pourvue d'un support supplémentaire (23) pour le montage d'une deuxième station de travail (3) en concaténation, le support supplémentaire (23) pour la deuxième station comprenant un quadrilatère articulé (Q) dont deux côtés contigus comprennent le premier bras (17) et la structure porteuse (10), dans lequel les paires de côtés opposés du quadrilatère articulé (Q) comprennent le premier bras (17) et une bielle (41), ainsi qu'un deuxième bras (42) et la structure porteuse (10), respectivement, le deuxième bras (42) étant articulé à une extrémité au premier bras (17) autour d'un troisième axe (44) qui est parallèle et espacé par rapport au premier axe (17a), et à l'extrémité opposée à une extrémité de pied de bielle (45) de la bielle, la bielle (41) ayant une extrémité de tête de bielle (46) qui est opposée à l'extrémité de pied de bielle (45) et qui est articulée à la structure porteuse (10) autour d'un quatrième axe (47) qui est parallèle et espacé par rapport au premier axe (17a), le deuxième bras (42) est agencé avec un système de connexion (48) pour la deuxième station, **caractérisé en ce que** le deuxième axe et le troisième axe (20, 44) coïncident, c'est-à-dire que le deuxième bras (42) est articulé au premier bras (17) sur l'axe de rotation du rouleau (14).

2. Machine agricole (1) selon la revendication 1, dans laquelle le système de connexion (48) pour la deuxième station est agencé à une extrémité distale du deuxième bras (42) par rapport au troisième axe (44) et à l'articulation de l'extrémité du pied de bielle (45).

3. Machine agricole (1) selon la revendication 1 ou 2, dans laquelle le deuxième bras (42) est en outre fixé au support (15) du rouleau dans une fente circonférentielle (55) centrée autour du troisième axe (44).

4. Machine agricole (1) selon une ou plusieurs des revendications précédentes, dans laquelle le premier bras (17) comprend un flanc (18) du support du rouleau.

5. Machine agricole (1) selon l'une ou plusieurs des revendications précédentes, dans laquelle la première station (2) est une herse rotative et la deuxième station (3) est une barre de semis.

6. Machine agricole (1) selon la revendication 5, dans laquelle la structure porteuse (10) comprend un boîtier de la herse fermé aux extrémités opposées par des flancs respectifs (12) et l'extrémité de la tête de bielle (46) de la bielle est articulée au flanc respectif (12).

7. Machine agricole (1) selon l'une ou plusieurs des revendications précédentes, dans laquelle le support (15) du rouleau est fixé de manière réglable à la structure porteuse (10) pour pivoter autour du premier axe (17a) au moyen d'une entretoise réglable (16) qui est interposée entre le support (15) du rouleau et la structure porteuse (10).

8. Machine agricole (1) selon la revendication 7, dans laquelle l'entretoise réglable (16) est un actionneur.

9. Machine agricole (1) selon l'une ou plusieurs des revendications précédentes, dans laquelle le système de connexion (48) est du type réversible incluant un support qui est agencé pour s'engager avec la deuxième station.

10. Machine agricole (1) selon l'une ou plusieurs des revendications précédentes, dans laquelle le système de connexion (48) comprend une pièce d'extension (49), dans laquelle est définie au moins une ouverture (50) pour s'engager avec la deuxième station.

11. Machine agricole (1) selon l'une ou plusieurs des revendications précédentes, dans laquelle l'extrémité du pied de bielle (45) de la bielle (41) est articulée au deuxième bras (42) dans une position intermédiaire entre le système de connexion (48) et le troisième axe (44).

12. Machine agricole (1) selon l'une ou plusieurs des revendications précédentes, dans laquelle les deux articulations du deuxième axe et du troisième axe (20, 44) bénéficient d'un même support de palier.

13. Kit (40) pour le montage d'une deuxième station de travail (3) en concaténation par rapport à une première station (2), la première station étant pourvue d'une structure porteuse (10) et d'un support (15) pour un rouleau (14) qui est monté de manière pivotante sur la structure porteuse autour d'un premier axe (17a), le support (15) du rouleau inclut un premier bras (17) qui est articulé à la structure porteuse autour du premier axe (17a) et qui porte le rouleau de manière rotative autour d'un deuxième axe (20) qui est parallèle et espacé par rapport au premier axe (17a), le kit (40) incluant une bielle (41) et un deuxième bras (42), le deuxième bras (42) étant articulé à une extrémité à une extrémité de pied de bielle (45) de la bielle et à l'extrémité opposée étant agencé pour être articulé au premier bras (17) autour d'un troisième axe (44) qui est parallèle et espacé par rapport au premier axe (17a), la bielle (41) ayant une extrémité de tête de bielle (46) qui est opposée à l'extrémité de pied de bielle (45) et qui est agencé pour être articulée à la structure porteuse (10) autour d'un quatrième axe (47) qui est parallèle et espacé par rapport au premier axe (17a), la bielle (41) et le deuxième bras (42) étant agencés pour être articulés au premier bras (17) et à la structure porteuse (10) de manière à définir un support supplémentaire (23) pour supporter la deuxième station (2) sur la première station (1), le support supplémentaire (23) pour la deuxième station comprend un quadrilatère articulé (Q), dans lequel les paires de côtés opposés du quadrilatère articulé (Q) comprennent le premier bras (17) et la bielle (41), ainsi que le deuxième bras (42) et la structure porteuse (10), respectivement, le deuxième bras (42) étant agencé avec un système de connexion (48) pour la deuxième station, **caractérisé en ce que** le deuxième bras (42) est configuré pour être articulé au premier bras (17) sur l'axe de rotation du rouleau (14) de sorte que le deuxième axe et le troisième axe (20, 44) coïncident.

14. Kit selon la revendication 13, dans lequel le système de connexion (48) est de type réversible et inclut un support agencé pour s'engager avec la deuxième station.

15. Kit selon la revendication 13 ou 14, dans lequel le système de connexion (48) comprend une pièce d'extension (49), dans laquelle est définie au moins une ouverture (50) pour s'engager avec la deuxième station.
